# EUROPEAN PATENT SPECIFICATION

(11) **EP 0 769 405 B1**
(45) Date of publication and mention of the grant of the patent: **17.01.2001**
(21) Application number: 96116707.9
(22) Date of filing: 17.10.1996
(51) Int. Cl.: B60K 37/00

(54) **Transparent cover for an instrument panel, in particular for motor vehicles**
Durchsichtige Abdeckung für ein Instrumentenbrett,insbesondere für Kraftfahrzeuge
Couverture transparente pour tableau de commande, notamment pour véhicules automobiles

(30) Priority: 20.10.1995 IT TO950852
(43) Date of publication of application: 23.04.1997
(73) Proprietor: MAGNETI MARELLI S.p.A., 20145 Milano (IT)
(72) Inventor: Fallini, Andrea, 20025 Legnano (IT); Poletti, Antonio, 20019 Settimo Milanese (IT)
(74) Representative: Boggio, Luigi

(56) References cited:
- GB-A- 2 190 780
- US-A- 4 475 614

## Description

The present invention relates to a transparent cover for an instrument panel, in particular for motor vehicles. The panel is fitted with a body that carries a facing plate for the said instruments, and with a cover joined to a frame.

Transparent covers of the abovementioned type are known in which both the cover and the frame are moulded individually from plastic and are then coupled together, for example by hot welding, before they are mounted onto the instrument panel. A relevant example of this kind of covers is disclosed in US-A-4 475 614. This technique has various drawbacks. Firstly, if welding is not carried out, it becomes particularly difficult to eliminate play in the join between the transparent cover and the frame, so that the cover can vibrate within the frame or vice versa. Also, both in the case of welding and with other coupling methods, possibilities in terms of the aesthetic aspect of the assembly are limited by the restrictions imposed by the various welding and/or mounting technologies. Lastly, the cost of the panel is relatively high on account of the double moulding operation and the subsequent need to couple the cover to the frame.

The object of the invention is to produce a transparent cover of the abovementioned type, which is extremely simple and cheap and which eliminates the drawbacks mentioned above with reference to known covers.

This object is achieved by a transparent cover according to claim 1.

In order to gain a better understanding of the invention, a preferred embodiment thereof will now be described which is given by way of example with the aid of the appended drawings, in which:
Figure 1 is an external view in elevation of a motor vehicle instrument panel incorporating a transparent cover according to the invention;
Figure 2 is a section of the panel shown in Figure 1, on a plane parallel to the instrument facing plate;
Figure 3 is a section of the cover, taken along the plane marked III-III in Figure 1;
Figures 4-10 show a detail of Figure 3, on an enlarged scale, according to a series of variants of the invention.

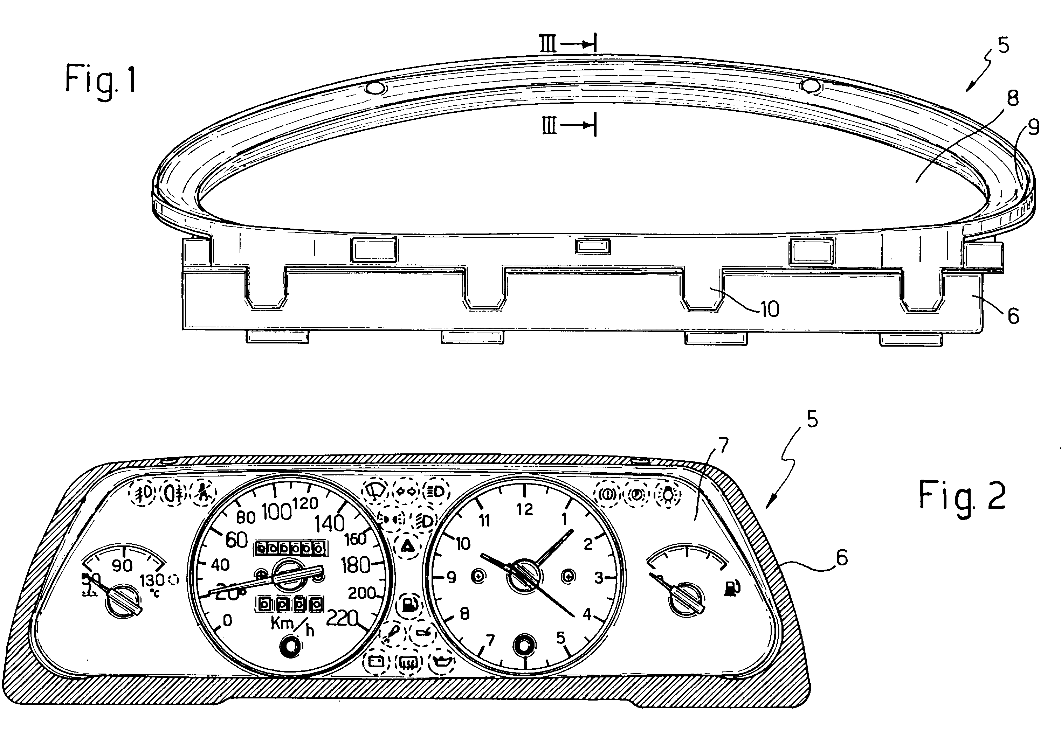

With reference to Figures 1 and 2, the reference numeral 5 indicates as a whole the instrument panel on board a motor vehicle, which panel comprises a hollow body 6 in which the various instruments are located. These instruments are covered by a facing plate 7 that carries the indicator dials of the various instruments and is fixed to the body 6 in a known manner.

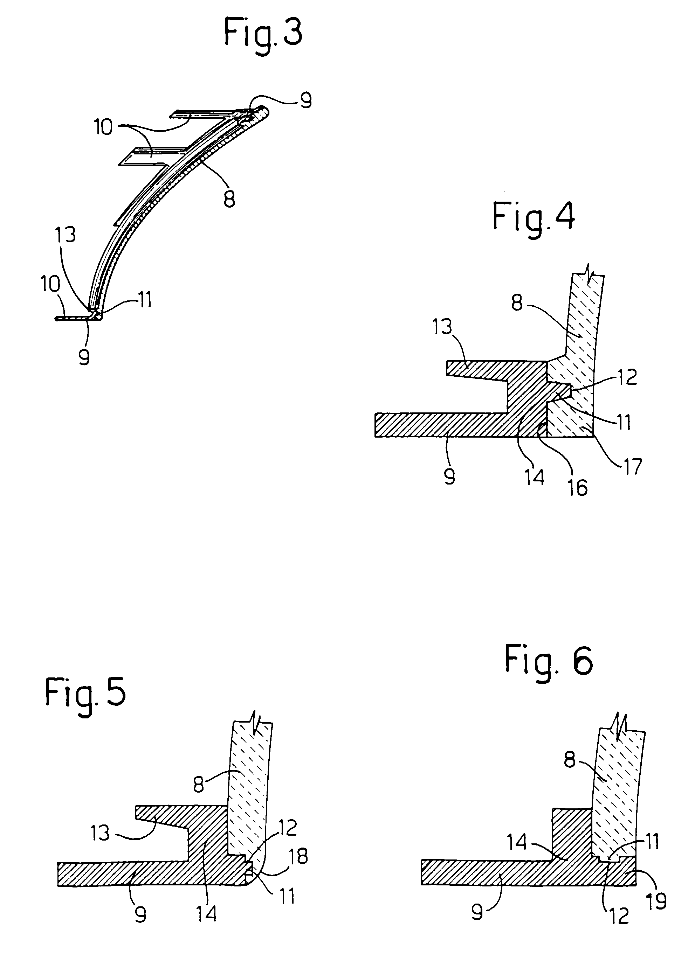

The facing plate 7 is in turn covered by a transparent cover 8 which is joined to a frame 9. This frame 9 is fitted with a series of fins 10 (see also Figure 3) which are able to engage in a corresponding series of cavities made in the body 6 or in the facing plate 7, so that the frame 9 can be removably fixed onto the panel 5, for example by means of snap-fastening.

According to the invention both the frame 9 and the transparent cover 8 are obtained by moulding two suitable plastics and are permanently coupled together. The frame 9 and the cover 8 can, in particular, be co-moulded in a single operation, in other words, using the two-colour plastic moulding technique in which the two plastics are, for example, injected into the mould via two different inlets.

These plastics are chosen so that they have good compatibility and so that they ensure a certain degree of adhesion between the contact surfaces of the two materials. For example the plastic known in the trade as ABS, which can be black in colour, can be chosen for the frame while the transparent plastic known in the trade as PMMA can be chosen for the cover.

Alternatively, the frame 9 and the cover 8 can be moulded successively. In this case a first material is used to mould the first of the two elements (frame or cover) and then, using the first element as an insert in the mould, the second element is moulded using the other material which thus adheres intimately to the first element.

In order to increase the adhesion between the two elements, undercut profile sections are created in the zones of contact between the frame 9 and the cover 8. These undercut profile sections are for example in the form of a rib 11 (Figures 4-10) of an element, which rib is inserted in a groove 12 of complementary section located in the other element. These undercut profile sections 11, 12 can also be confined to a series of segments along the contact periphery between the frame 9 and the cover 8.

Figures 4-10 show a number of variants of the undercut profile sections. In the variant shown in Figure 4, the frame 9 has an internal reinforcement flange 13 and a peripheral edge 14 on which the rib 11 is located. This rib 11 has a trapezoidal section and engages in the groove 12 located on an internal wall 16 of a reinforcement strip 17 of the transparent cover 8. In the variant shown in Figure 5, the rib 11 has a rectangular section and is located on the plane of the frame 9, while the cover 8 does not have any reinforcement strip but has a rounded peripheral edge 18.

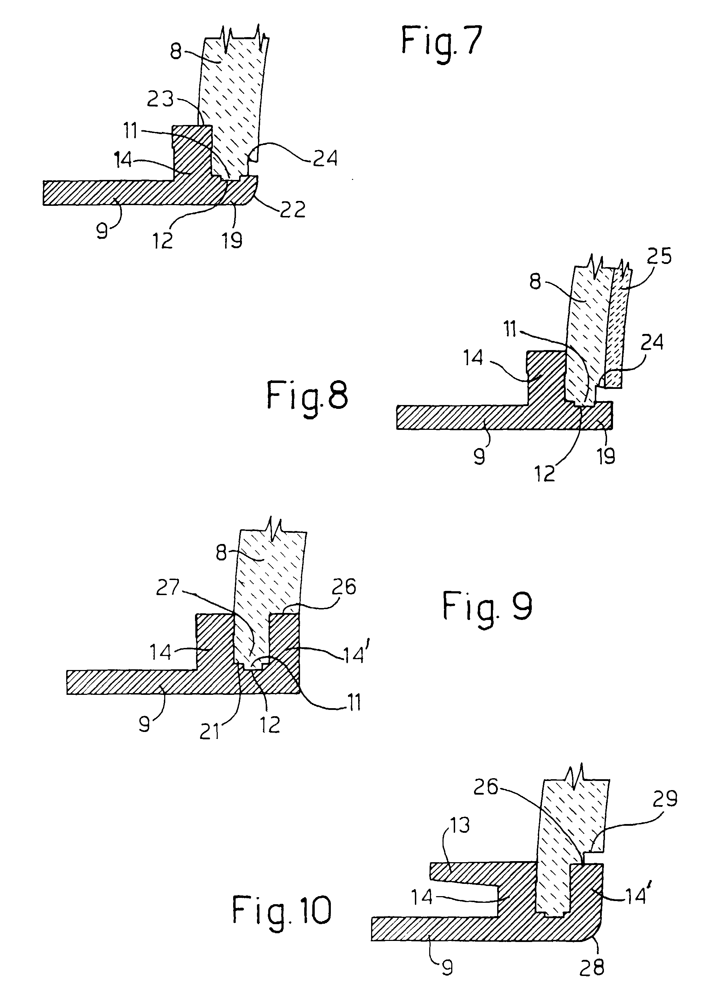

In the variant shown in Figure 6, the groove 12, which has a rectangular section, is carried on a strip 19 outside the edge 14, while a peripheral edge 21 on the cover 8 carries the rib 11 which engages in the groove 12. In the variant shown in Figure 7, the strip 19 of the frame 9 has a rounded peripheral edge 22, while the cover 8 has an internal indentation 23 in which the edge 14 of the frame 9 engages, and an external indentation 24 which faces the strip 19. In the variant shown in Figure 8, the strip 19 does not have the rounded edge and the cover 8 does not have the internal indentation but is covered with a protective layer 25.

The variant shown in Figure 9 differs from the variant shown in Figure 6 by the fact that it has a pair of edges 14 and 14', between which the groove 12 is located. The cover 8 has an external indentation 26 which is equal in depth to the thickness of the external edge 14'. The indentation 26 forms a peripheral zone 27, on the peripheral edge 21 of which is located the rib 11, so that the two edges 14 and 14' surround the peripheral zone 27. Lastly, in the variant shown in Figure 10, the frame 9 has the internal flange 13 while the external edge 14' of the frame 9 has a rounded edge 28. The cover 8 in turn differs from that shown in Figure 9 by the fact that it has a step 29 along the external indentation 24.

In comparison with known covers, the advantages offered by the transparent cover of the invention should be quite clear from the above description. First and foremost, all play between the frame and the cover is eliminated, as is the subsequent need for hot welding. In addition, the mounting of the panel is simplified which results in a considerable reduction in the panel production costs. Lastly, the invention offers a whole series of advantages in terms of the aesthetic aspect of the cover.

It is understood that various other modifications and improvements can be made to the cover described without thereby departing from the scope of the claims. For example, the details which characterize the variants shown in Figures 4-10 can be selected or combined together in various ways.

## Claims

1. Transparent cover for an instrument panel, in particular for motor vehicles, in which the panel (5) is fitted with a body (6) that carries a facing plate (7) for said instruments, and in which the cover (8) is joined to a frame (9) that can be attached to said body (6) or to said facing plate (7), **characterized in that** said frame (9) and said cover (8) are obtained by moulding two suitable plastics and are permanently coupled together along a continuous peripheral edge (14) of said frame (9) which completely surrounds a corresponding peripheral edge (21) of said cover (8); said frame (9) being fitted with a plurality of projecting fins (10) that can be removably fixed in corresponding cavities in said body (6) or in said facing plate (7), said projecting fins (10) being positioned laterally spaced apart from one the other along said peripheral continuos edge (14) of said frame (9).

2. Cover according to Claim 1, characterized in that said frame (9) and said cover (8) are co-moulded in two-colour plastic, said two plastics being injection moulded and being chosen so that they have good mutual compatibility.

3. Cover according to Claim 1, characterized in that said frame (9) and said cover (8) are obtained in successive moulding operations, the product of the first moulding operation being used as an insert during the second moulding operation.

4. Cover according to Claim 2 or 3, characterized in that said frame (9) is coupled to said cover (8) by means of undercut profile sections (11, 12) in the zone of contact between the two materials moulded in this way.

5. Cover according to Claim 4, characterized in that said zone is confined to a plurality of segments along the periphery of the said cover (8).

6. Cover according to Claim 4 or 5, characterized in that one of said profile sections (11, 12) comprises a prismatic rib (11) located on one edge (14) of said frame (9) and engaging in a complementary groove (12) in said cover (8).

7. Cover according to Claim 4 or 5, characterized in that one of said profile sections comprises a prismatic rib (11) located on a peripheral edge (21) of said cover (8) and engaging in a complementary groove (12) in said frame (9).

8. Cover according to Claim 7, characterized in that said frame (9) comprises a pair of edges (14, 14') that can surround a peripheral zone (27) of said cover (8).

9. Cover according to one of Claims 5 to 8, characterized in that said cover (8) has a protective layer (25) on at least one of its faces.

## Patentansprüche

1. Durchsichtige Abdeckung für ein Instrumentenbrett (8), insbesondere für Kraftfahrzeuge, bei denen das Instrumentenbrett in einer Aufnahme (6) eingesetzt ist und eine Anzeigetafel (7) für die besagten Instrumente trägt und die Abdeckung (8) mit einem Rahmen (9) verbunden ist, welcher an der Aufnahme (6) oder der Anzeigetafel (7) anbringbar ist,
**dadurch gekennzeichnet,**
dass der Rahmen (9) und die Abdeckung (8) von zwei geeignet ausgebildeten, im Spritzgießverfahren hergestellten und entlang einer ununterbrochen umlaufenden Randkante (14) des besagten Rahmens permanent miteinander verbundenen Kunststoffteilen gebildet werden, und dass der Rahmen mit einer Anzahl von Rippenvorsprüngen (10) versehen ist, welche in zugeordnete Aussparungen im Aufnahmegehäuse (6) oder der Anzeigetafel (7) befestigbar sind, wobei die vorstehenden Rippenansätze (10) seitlich voneinander beabstandet an der umlaufenden Randkante (14) des Rahmens (9) angeordnet sind.

2. Abdeckung nach Anspruch 1, dadurch gekennzeichnet, dass der Rahmen (9) und die Abdeckung (8) in einem gemeinsamen Herstellungssschritt als Zweifarben-Kunststoffteil im Spritzgußverfahren aus zwei mit guter wechselseitiger Verträglichkeit gewählten Kunststoffen hergestellt sind.

3. Abdeckung nach Anspruch 1, dadurch gekennzeichnet, dass der Rahmen (9) und die Abdeckung (8) in zwei aufeinanderfolgenden Spritzgussschritten hergestellt sind, wobei der im ersten Schritt hergestellte Teil während des zweiten Schritts als Einsatz verwendet wird.

4. Abdeckung nach Anspruch 2 oder 3, dadurch gekennzeichnet, dass der Rahmen (9) und die Abdeckung (8) durch in der Kontaktzone zwischen den beiden in dieser Weise spritzgegossenen Materialien vorgesehene hinterschnittene Profilabschnitte (11, 12) miteinander verbunden sind.

5. Abdeckung nach Anspruch 4, dadurch gekennzeichnet, dass die Kontaktzone auf eine Anzahl von am Umfang der Abdeckung (8) vorgesehene Segmentabschnitte beschränkt ist.

6. Abdeckung nach Anspruch 4 oder 5, dadurch gekennzeichnet, dass einer der Profilabschnitte (11, 12) eine prismatische Rippe (11) an einer Randkante (14) des Rahmens (9) aufweist, welche in eine komplementäre Nut (12) in der Abdeckung (8) eingreift.

7. Abdeckung nach Anspruch 4 oder 5, dadurch gekennzeichnet, dass einer der Profilabschnitte eine an einer umlaufenden Randkante (21) der Abdeckung (8) angeordnete prismatische Rippe (11) aufweist, welche in eine komplementäre Nut (12) im Rahmen (9) eingreift.

8. Abdeckung nach Anspruch 7, dadurch gekennzeichnet, dass der Rahmen ein Paar von Randkanten (14, 14') aufweist, welche einen Umfangsabschnitt (27) der Abdeckung (8) umgreifen.

9. Abdeckung nach einem der Ansprüche 5 bis 8, dadurch gekennzeichnet, dass auf wenigstens einer der Flächen der Abdeckung (8) ein Schutz-Belag (25) aufgebracht ist.

## Revendications

1. Ecran de protection transparent pour panneau d'instruments, en particulier pour des véhicules à moteur, dans lequel le panneau (5) est muni d'un corps (6) qui supporte une plaque apparente (7) desdits instruments, et dans lequel l'écran de protection 8 est relié à un cadre (9) qui peut être fixé sur ledit corps (6) ou sur ladite plaque apparente (7),
caractérisé en ce que ledit cadre (9) et ledit écran de protection (8) sont obtenus en moulant deux matières plastiques adaptées et sont reliés ensemble de manière permanente le long d'un bord périphérique continu (14) dudit cadre (9) qui entoure entièrement un bord périphérique correspondant (21) dudit écran de protection (8), ledit cadre (9) étant muni d'une pluralité d'ailettes en saillie (10) qui peuvent être fixées de manière amovible dans des cavités correspondantes dudit corps (6) ou dans ladite plaque apparente (7), lesdites ailettes en saillie (10) étant positionnées de manière latéralement écartées les unes des autres le long dudit bord continu périphérique (14) dudit cadre (9).

2. Ecran de protection selon la revendication 1, caractérisé en ce que ledit cadre (9) et ledit écran de protection (8) sont co-moulés en deux matières plastiques de couleur, lesdites deux matières plastiques étant moulées par injection et étant choisies de sorte qu'elles aient une bonne compatibilité mutuelle.

3. Ecran de protection selon la revendication 1, caractérisé en ce que ledit cadre (9) et ledit écran de protection (8) sont obtenus dans des opérations de moulage successives, le produit de la première opération de moulage étant utilisé en tant qu'élément rapporté pendant la seconde opération de moulage.

4. Ecran de protection selon la revendication 2 ou 3, caractérisé en ce que ledit cadre (9) est relié audit écran de protection (8) par l'intermédiaire de tronçons profilés découpés (11, 12) situés dans la zone de contact entre les deux matériaux moulés de cette manière.

5. Ecran de protection selon la revendication 4, caractérisé en ce que ladite zone est confinée à une pluralité de segments situés le long de la périphérie dudit écran de protection (8).

6. Ecran de protection selon la revendication 4 ou 5, caractérisé en ce qu'un premier desdits tronçons profilés (11, 12) comporte une nervure prismatique (11) située sur un premier bord (14) dudit cadre (9) et venant en prise dans une gorge complémentaire (12) dudit écran de protection (8).

7. Ecran de protection selon la revendication 4 ou 5, caractérisé en ce qu'un premier desdits tronçons profilés est constitué d'une nervure prismatique (11) positionnée sur un bord périphérique (21) dudit écran de protection (8) et venant en prise dans une gorge complémentaire (12) dudit cadre (9).

8. Ecran de protection selon la revendication 7, caractérisé en ce que ledit cadre (9) comporte une paire de bords (14, 14') qui peuvent entourer une zone périphérique (27) dudit écran de protection (8).

9. Ecran de protection selon l'une quelconque des revendications 5 à 8, caractérisé en ce que ledit écran de protection (8) a une couche de protection (25) sur au moins une de ses faces.
